# EUROPEAN PATENT APPLICATION

(11) **EP 4 537 801 A1**
(43) Date of publication of application: **16.04.2025**
(21) Application number: 23825906.3
(22) Date of filing: 17.04.2023
(51) Int. Cl.: A61G 7/05

(54) **ELECTRIC AUXILIARY DRIVING APPARATUS AND HOSPITAL BED WITH SAME**

(30) Priority: 23.06.2022 CN 202210719281
(71) Applicant: Bewatec (Zhejiang) Medical Devices Co., Ltd, Jiaxing, Zhejiang 314000 (CN); Bewatec (Shangai) Medical Devices Co., Ltd., Shanghai 201799 (CN)
(72) Inventor: SASCHA, Koltzenburg, Jiaxing, Zhejiang 314000 (CN); BI, Chengcheng, Jiaxing, Zhejiang 314000 (CN); FAN, Jia, Jiaxing, Zhejiang 314000 (CN)
(74) Representative: Zacco GmbH
(86) International application number: PCT/CN2023/088749
(87) International publication number: WO 2023/246253

(57) **Abstract**

Disclosed are an electric auxiliary driving device and a hospital bed with the electric auxiliary driving device. The electric auxiliary driving device includes: a mounting support (10) fixedly connected with a furniture; a rocker (20), wherein a first end of the rocker (20) is provided with a rotatable roller (21), and a second end of the rocker (20) is hinged to the mounting support (10); a pulling device (50) connected with the rocker (20), wherein the pulling device (50) is connected with the roller (21) in a driving manner; a lifting device (30) including a driving device and a sliding block (44) moving along a straight line, wherein the driving device drives the rocker (20) to rotate by driving the sliding block (44) to move; and a balancing device (40) including a spring support rod (43), wherein a first end of the spring support rod (43) is hinged to the rocker (20), and a second end of the spring support rod (43) is hinged to the sliding block (44). The electric auxiliary driving device can solve a problem that an auxiliary driver in the related art occupies large space.

## Description

The invention claims the priority to Patent Application No. 202210719281.0, filed to the China National Intellectual Property Administration on June 23, 2022 and entitled "Electric auxiliary driving device and hospital bed with electric auxiliary driving device".

### Technical Field

The invention relates to the technical field of smart homes, and particularly relates to an electric auxiliary driving device and a hospital bed with the electric auxiliary driving device.

### Background

The emergence of movable furniture, especially movable beds, has brought great convenience to people's daily life. Four rollers are generally arranged at four corners of the movable bed. In a moving process, friction between the bed and the ground is greatly reduced through rolling of the rollers, thereby achieving the purpose of saving labor.

In the related art, the movable bed is further provided with an auxiliary driver to relieve pressure of workers. The auxiliary driver includes rollers and an electric motor connected with the rollers in a driving manner. The rollers can be driven to rotate by the electric motor, and springs are arranged between the bed and the rollers, such that the rollers always cling to a bottom surface. However, the auxiliary driver in the related art is arranged vertically, and occupies large space in a height direction.

### Summary

The invention provides an electric auxiliary driving device and a hospital bed with the electric auxiliary driving device, so as to solve a problem that an auxiliary driver in the related art occupies large space.

One aspect of the invention provides an electric auxiliary driving device. The electric auxiliary driving device includes: a mounting support fixedly connected with a furniture; a rocker, wherein a first end of the rocker is provided with a rotatable roller, and a second end of the rocker is hinged to the mounting support; a pulling device connected with the rocker, wherein the pulling device is connected with the roller in a driving manner; a lifting device including a driving device and a sliding block moving along a straight line, wherein the driving device drives the rocker to rotate by driving the sliding block to move; and a balancing device including a spring support rod, wherein a first end of the spring support rod is hinged to the rocker, and a second end of the spring support rod is hinged to the sliding block.

Further, the balancing device further includes a guiding structure. The guiding structure extends along the straight line. The guiding structure includes a guiding element and a guiding groove. The guiding element is inserted into the guiding groove. The guiding groove is provided on one of the mounting support or the sliding block. The guiding element is arranged on the other one of the mounting support or the sliding block.

Further, the guiding element includes a linear guide rail arranged on a side wall of the sliding block. The mounting support is provided with two parallel guiding plates. A space between the two guiding plates forms the guiding groove. Alternatively, the guiding element includes a linear guide rail arranged on a bottom wall of the sliding block. The mounting support is provided with two parallel guiding ribs. A space between the two guiding ribs forms the guiding groove.

Further, the driving device includes a first gear motor and a first spindle. The first gear motor drives the first spindle to rotate. The first spindle is provided with an external thread. The sliding block is provided with a first threaded hole. The external thread is connected with the first threaded hole in a threaded manner.

Further, the driving device includes a driving motor and a second spindle connected with the driving motor in a driving manner. The second spindle is connected with the sliding block and drives the sliding block to move along the straight line.

Further, the lifting device further includes a worm wheel and a worm that are capable of rotating relatively and cooperating with each other. The driving motor includes a second gear motor. An output end of the second gear motor is connected with the worm in a driving manner. Teeth of the worm are engaged with external teeth of the worm wheel. The worm wheel is provided with a second threaded hole. The second spindle penetrates the second threaded hole and is connected with the worm wheel in a threaded manner.

Further, the lifting device further includes a worm wheel housing fixedly connected with the mounting support. The worm wheel is arranged in the worm wheel housing. The lifting device further includes a first rolling bearing and a second rolling bearing. The worm wheel housing includes a first worm wheel half-housing and a second worm wheel half-housing connected to each other. An inner ring of the first rolling bearing and an inner ring of the second rolling bearing are sleeved on two ends of the worm wheel respectively. The first worm wheel half-housing and the second worm wheel half-housing are configured to fasten outer rings of the first rolling bearing and the second rolling bearing.

Further, the spring support rod includes a spring support rod shaft, an upper spring support rod head and a lower spring support rod head. An upper end of the spring support rod shaft is inserted into a first end of the upper spring support rod head. A second end of the upper spring support rod head is hinged to the sliding block. A first end of the lower spring support rod head is hinged to the rocker. A second end of the lower spring support rod head is connected with a lower end of the spring support rod shaft. The balancing device further includes a first compression spring being sleeved on a periphery of the spring support rod shaft. The first compression spring is sandwiched between the upper spring support rod head and the lower spring support rod head.

Further, the balancing device further includes an upper spring support rod bearing, a lower spring support rod bearing, a first articulated shaft and a second articulated shaft. The second end of the upper spring support rod head is hinged to the sliding block through the first articulated shaft. An inner ring of the upper spring support rod bearing is sleeved on a periphery of the first articulated shaft. An outer ring of the upper spring support rod bearing is sleeved on the second end of the upper spring support rod head. The first end of the lower spring support rod head is hinged to the rocker through the second articulated shaft. An inner ring of the lower spring support rod bearing is sleeved on a periphery of the second articulated shaft. An outer ring of the lower spring support rod bearing is sleeved on the first end of the lower spring support rod head.

Further, the spring support rod shaft includes a tap bolt. The upper spring support rod head is provided with a first stepped hole in a penetrating manner. A bolt head of the tap bolt is movably inserted into the first stepped hole. A bolt shank of the tap bolt is connected with the lower spring support rod head. When the upper spring support rod head has a maximum distance from the lower spring support rod head, the bolt head of the tap bolt abuts against a stepped surface of the first stepped hole.

Further, the tap bolt includes a reaming bolt. A threaded shank of the reaming bolt is connected with the lower spring support rod head.

Further, the spring support includes an inserting seat and an inserting pin. A first end of the inserting seat is hinged to the rocker. A first end of the inserting pin is inserted into a second end of the inserting seat. A second end of the inserting pin is hinged to the sliding block. The balancing device further includes a second compression spring sleeved on a periphery of the spring support rod. The second compression spring is sandwiched between the inserting seat and the inserting pin.

Further, the spring support rod further includes a limiting member connected with the first end of the inserting pin. The inserting pin includes an inserting pin rod and an inserting pin head connected to each other. The first end of the inserting seat is hinged to the rocker. The second end of the inserting seat is provided with a second stepped hole. The inserting pin rod is movably inserted into the second stepped hole. A second end of the inserting pin head is hinged to the sliding block. When the inserting pin head has a maximum distance from the inserting seat, the limiting member abuts against a stepped surface of the second stepped hole. When the inserting pin head has a minimum distance from the inserting seat, the inserting pin head abuts against the inserting seat.

Further, the rocker includes a connecting section and a bearing fork connected to each other. The bearing fork includes two bearing fork arms arranged at two sides of the roller respectively. The pulling device is connected with one of the bearing fork arms. The roller is provided with a roller shaft. One end of the roller shaft is rotatably connected with the bearing fork. An output end of the pulling device is connected with the other end of the roller shaft in a driving manner.

Further, the electric auxiliary driving device further includes a rocker bearing shaft. The mounting support is hinged to the second end of the rocker through the rocker bearing shaft. The spring support rod is movably arranged between the roller and the rocker bearing shaft. The rocker further includes a web plate. The two bearing fork arms are connected through one side of the web plate. The other side of the web plate is connected with the connecting section. The connecting section is provided with a groove disposed obliquely downwards. The first end of the spring support rod is inserted into the groove. The mounting support is provided with a stopper. The stopper abuts against the bearing fork so as to limit a rotation angle of the rocker.

Another aspect of the invention provides a hospital bed. The hospital bed includes: a bed body; and an electric auxiliary driving device. A mounting support of the electric auxiliary driving device is connected with the bed body. The electric auxiliary driving device includes the above-mentioned electric auxiliary driving device.

Through the technical solution of the invention, the electric auxiliary driving device includes the mounting support, the rocker, the pulling device, the lifting device and the balancing device. The mounting support is fixedly connected with the furniture, and the driving device drives the sliding block to extend out of the mounting support along the straight line. Further, the sliding block drives the spring support rod to rotate, and the spring support rod drives the rocker to rotate, such that the roller is in contact with the ground. Then, the pulling device drives the roller to roll. In this way, the furniture can be driven to move by the electric auxiliary driving device, such that pressure generated when an operator moves the furniture can be reduced. The lifting device and the balancing device are connected by the sliding block moving linearly, and the sliding block moves linearly in a horizontal direction. Thus, a lifting function of the electric auxiliary driving device can be achieved in very small mounting space. Moreover, other parts of the electric auxiliary driving device are all arranged below the mounting support, reducing mounting space in a height direction.

### Brief Description of the Drawings

The accompanying drawings, constituting part of the description, are used to provide further understanding of the invention, and illustrative embodiments and their description of the invention serve to explain the invention instead of improperly limiting the invention. In the drawings:
Fig. 1 is a schematic structural diagram showing that a roller of an electric auxiliary driving device according to Embodiment 1 of the invention is located at a retraction position;
Fig. 2 is another schematic structural diagram showing that the roller of the electric auxiliary driving device according to Embodiment 1 of the invention is located at the retraction position;
Fig. 3 is a schematic structural diagram showing that the roller of the electric auxiliary driving device according to Embodiment 1 of the invention is located at a working position;
Fig. 4 is another schematic structural diagram showing that the roller of the electric auxiliary driving device according to Embodiment 1 of the invention is located at the working position;
Fig. 5 is a sectional view showing that the roller of the electric auxiliary driving device according to Embodiment 1 of the invention is located at the retraction position;
Fig. 6 is a sectional view showing that the roller of the electric auxiliary driving device according to Embodiment 1 of the invention is located at the working position;
Fig. 7 is a sectional view of the working position at which the roller of the electric auxiliary driving device according to Embodiment 1 of the invention meets a protrusion on the ground;
Fig. 8 is a sectional view of the working position at which the roller of the electric auxiliary driving device according to Embodiment 1 of the invention meets a recess on the ground;
Fig. 9 is an exploded view of the electric auxiliary driving device according to Embodiment 1 of the invention;
Fig. 10 is another exploded view of the electric auxiliary driving device according to Embodiment 1 of the invention;
Fig. 11 is a schematic structural diagram of an electric auxiliary driving device according to Embodiment 2 of the invention;
Fig. 12 is another schematic structural diagram of the electric auxiliary driving device according to Embodiment 2 of the invention;
Fig. 13 is a schematic structural diagram of an inserting pin of the electric auxiliary driving device according to Embodiment 2 of the invention;
Fig. 14 is a schematic structural diagram of an inserting seat of the electric auxiliary driving device according to Embodiment 2 of the invention;
Fig. 15 is a sectional view showing that a roller of the electric auxiliary driving device according to Embodiment 2 of the invention is located at a retraction position;
Fig. 16 is a sectional view showing that the roller of the electric auxiliary driving device according to Embodiment 2 of the invention is located at a working position;
Fig. 17 is a sectional view of the working position at which the roller of the electric auxiliary driving device according to Embodiment 2 of the invention meets a protrusion on the ground; and
Fig. 18 is a sectional view of the working position at which the roller of the electric auxiliary driving device according to Embodiment 2 of the invention meets a recess on the ground.

The above figures include the following reference numerals:
10, mounting support; 11, rocker bearing shaft; 12, guiding groove; 14, housing;
20, rocker; 21, roller; 22, roller shaft; 23, groove; 24, bearing fork; 25, web plate;
30, lifting device; 31, driving motor; 32, worm; 33, worm wheel; 33.1, second threaded hole; 33.2, external tooth; 33.3, first rolling bearing; 33.4, second rolling bearing; 34, worm wheel housing; 34.1, first worm wheel half-housing; 34.2, second worm wheel half-housing; 35, second spindle; 37, shifting cam ring; 38, first limiting switch; 39, second limiting switch;
40, balancing device; 41, upper spring support rod bearing; 42, lower spring support rod bearing; 43, spring support rod; 43.1, upper spring support rod head; 43.2, lower spring support rod head; 43.3, spring support rod shaft; 43.4, first compression spring; 44, sliding block; 44.1, linear guide rail; 44.2, lining; 44.3, fixing hole; 45, inserting seat; 46, inserting pin; 46.1, inserting pin rod; 46.2, inserting pin head; 47, limiting member;
50, pulling device; 51, third gear motor.

### Detailed Description of the Embodiments

Technical solutions of embodiments of the invention will be clearly and completely described below in conjunction with the accompanying drawings of the embodiments of the invention. Obviously, the embodiments described are merely some embodiments rather than all the embodiments of the invention. The following description of at least one illustrative embodiment is merely illustrative in nature and in no way serves as any limitation of the invention and its application or use. On the basis of the embodiments of the invention, all other embodiments obtained by those of ordinary skill in the art without making creative efforts fall within the protection scope of the invention.

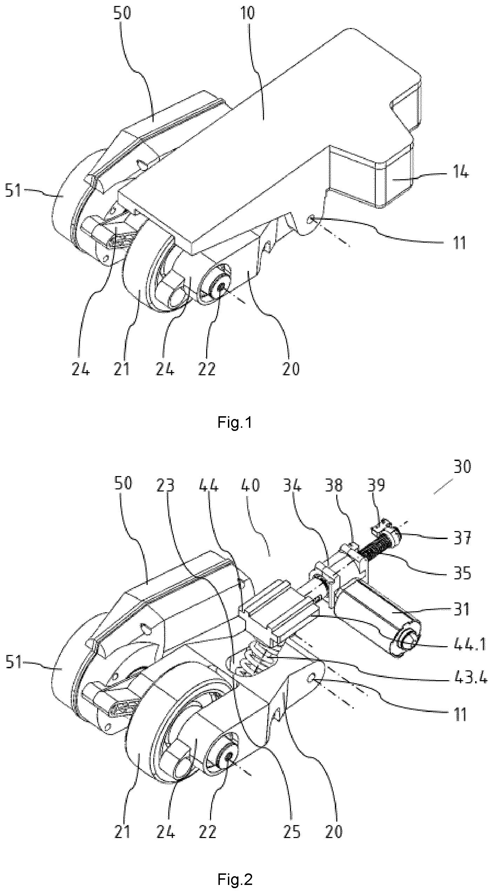

As shown in Figs. 1-10, Embodiment 1 of the invention provides an electric auxiliary driving device. The electric auxiliary driving device includes a mounting support 10, a rocker 20, a pulling device 50, a lifting device 30, and a balancing device 40. The mounting support 10 is fixedly connected with a furniture. A first end of the rocker 20 is provided with a rotatable roller 21. A second end of the rocker 20 is hinged to the mounting support 10. The pulling device 50 is connected with the rocker 20. The pulling device 50 is connected with the roller 21 in a driving manner. The lifting device 30 includes a driving device and a sliding block 44 moving along a straight line. The driving device drives the rocker 20 to rotate by driving the sliding block 44 to move. The balancing device 40 includes a spring support rod 43. A first end of the spring support rod 43 is hinged to the rocker 20. A second end of the spring support rod 43 is hinged to the sliding block 44.

Through the technical solution of the invention, the electric auxiliary driving device includes the mounting support 10, the rocker 20, the pulling device 50, the lifting device 30 and the balancing device 40. The mounting support 10 is fixedly connected with the furniture, and the driving device drives the sliding block 44 to extend out of the mounting support 10 along the straight line. Further, the sliding block 44 drives the spring support rod 43 to rotate, and the spring support rod 43 drives the rocker 20 to rotate, such that the roller 21 is in contact with the ground. Then, the pulling device 50 drives the roller 21 to roll. In this way, the furniture can be driven to move by the electric auxiliary driving device, such that pressure generated when an operator moves the furniture can be reduced. The lifting device and the balancing device are connected by the sliding block 44 moving linearly, and the sliding block 44 moves linearly in a horizontal direction. Thus, a lifting function of the electric auxiliary driving device can be achieved in very small mounting space. Moreover, other parts of the electric auxiliary driving device are all arranged below the mounting support 10, reducing mounting space in a height direction.

Moreover, the electric auxiliary driving device of the invention is particularly applied to beds in hospitals and sanatoriums. The electric auxiliary driving device is added to a mobile hospital bed firmly supported by at least 3 casters. In the above configuration, fixed casters cannot guarantee permanent contact with the ground. Thus, in addition to the lifting device 30 configured to temporarily lower or raise the roller 21, the balancing device 40 is further provided, such that the roller 21 is kept in constant contact with the ground.

In the embodiment, an upper surface of the mounting support 10 is fixedly connected with a lower surface of the furniture, the rocker 20 is located in a rear zone below the mounting support 10, the pulling device 50 is located at one side of the rocker 20 and connected with the side of the rocker 20, and the lifting device 30 is located in a front zone below the mounting support 10. With arrangement of the above structure, after the roller 21 is retracted, the roller can be completely located in the rear zone below the mounting support 10. By excluding a wall thickness of a furniture baseplate or a height of a support at a top of the mounting support 10, a minimum height of the electric auxiliary driving device in the invention is completely determined by a diameter of the roller 21 after the roller 21 is retracted. In this way, an avoidance groove in a central zone of the mounting support 10 can also be designed so as to accommodate the roller, such that the minimum height of the electric auxiliary driving device corresponds to the diameter of the roller 21.

It should be noted that with the lifting device 30, the rocker 20 can firstly rotate downward around a hinge point to the mounting support 10, such that the rocker can enter its driving position so as to enable the roller 21 to be in contact with the ground. Then, the balancing device 40 may compensate for an uneven part, for instance, a protrusion and a recess, of the ground at the position, such that the roller 21 is always kept in contact with the ground.

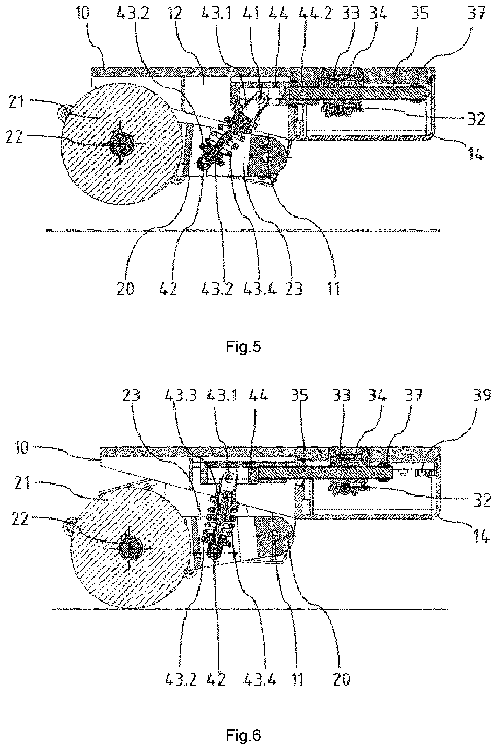

As shown in Figs. 2 and 5, the balancing device 40 further includes a guiding structure. The guiding structure extends along the straight line. The guiding structure includes a guiding element and a guiding groove 12. The guiding element is inserted into the guiding groove 12. The guiding groove 12 is provided on one of the mounting support 10 or the sliding block 44. The guiding element is arranged on the other one of the mounting support 10 or the sliding block 44. The guiding structure can be configured to guide the sliding block 44, and the sliding block 44 can move in an extension direction of the guiding structure, such that the sliding block 44 will not deflect, and normal operation of the balancing device 40 and the rocker 20 can be ensured.

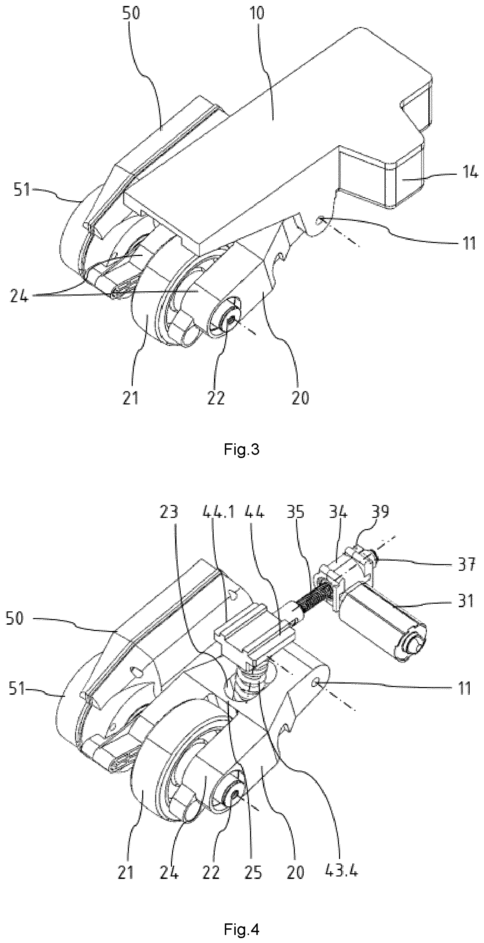

As shown in Figs. 4 and 5, the guiding element includes a linear guide rail 44.1 arranged on a side wall of the sliding block 44, a side wall of the mounting support 10 is provided with two parallel guiding plates, and a space between the two guiding plates forms the guiding groove 12. The guiding element and the guiding groove 12 of the above structure have advantages of simple structure and convenient processing.

In other embodiments, the guiding element includes a linear guide rail 44.1 arranged on a bottom wall of the sliding block 44, a bottom wall of the mounting support 10 is provided with two parallel guiding ribs, and a space between the two guiding ribs forms the guiding groove 12. With the above structure, advantages of simple structure and convenient processing are achieved.

In the embodiment, the driving device includes a driving motor 31 and a second spindle 35 connected with the driving motor 31 in a driving manner. The second spindle 35 is connected with the sliding block 44 and drives the sliding block 44 to move along the straight line. With the driving device of the above structure, the driving motor 31 can drive the second spindle 35, and the second spindle 35 can drive the sliding block 44 to move along the straight line, such that advantages of simple driving structure and simple transmission structure are achieved.

Specifically, a second end of the sliding block 44 is provided with a lining 44.2. The lining 44.2 is provided with a fixing hole 44.3. A first end of the second spindle 35 is inserted into the lining 44.2. The second spindle 35 and the sliding block 44 are connected by inserting a fixing pin into the fixing hole.

In other embodiments, the driving device includes a first gear motor and a first spindle. The first gear motor drives the first spindle to rotate. The first spindle is provided with an external thread. The sliding block 44 is provided with a first threaded hole. The external thread is connected with the first threaded hole in a threaded manner. With the above structure, rotary motion of the first spindle can be converted into linear motion of the sliding block 44, achieving an advantage of simple structure.

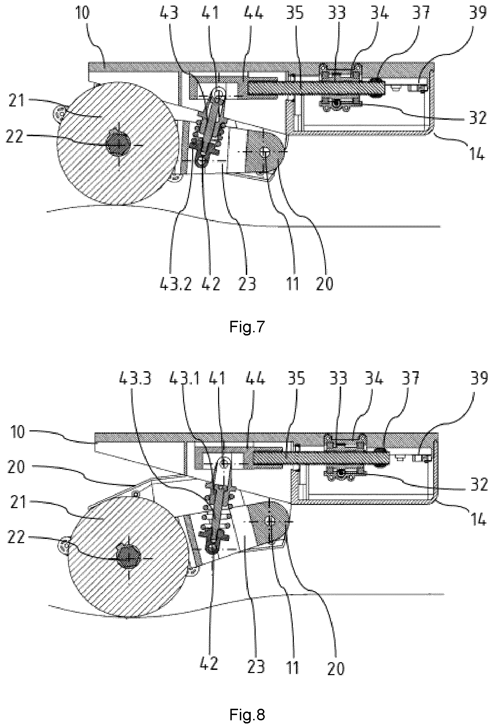

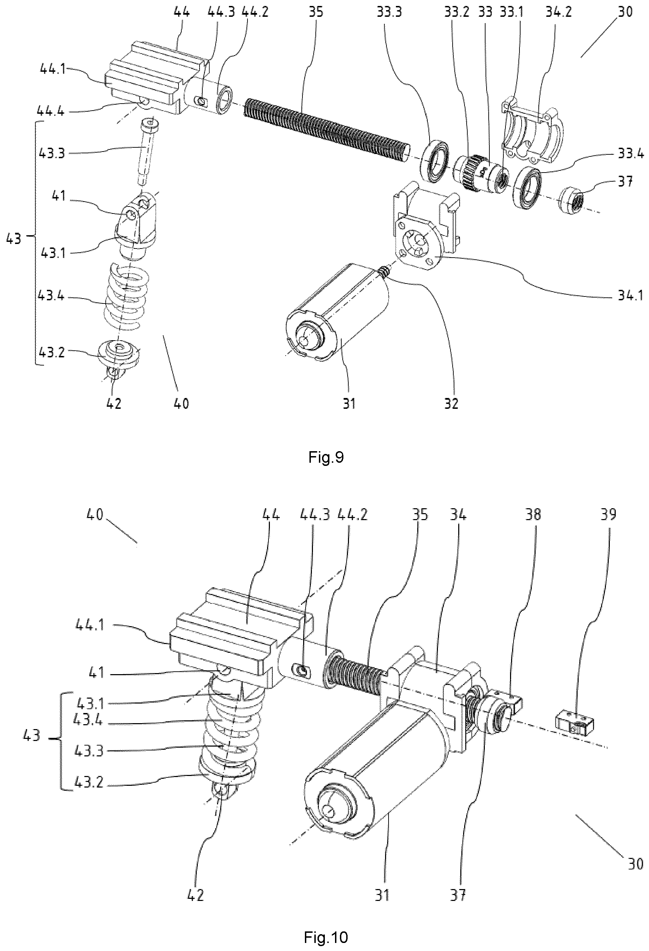

As shown in Figs. 8 and 9, the lifting device 30 further includes a worm wheel 33 and a worm 32 that are capable of rotating relatively and cooperating with each other. The driving motor 31 includes a second gear motor. An output end of the second gear motor is connected with the worm 32 in a driving manner. Teeth of the worm 32 are engaged with external teeth 33.2 of the worm wheel 33. The worm wheel 33 is provided with a second threaded hole 33.1. The second spindle 35 penetrates the second threaded hole 33.1 and is connected with the worm wheel 33 in a threaded manner. Through cooperation of the worm wheel 33 and the worm 32, rotary motion of an output shaft of the gear motor can be converted into linear motion of the second spindle 35, achieving advantages of simple transmission structure and high reliability.

In the embodiment, a shifting cam ring 37 is sleeved on a second end of the second spindle 35. Extension or retraction of the second spindle 35 is implemented through alternate cooperation of the shifting cam ring 37 with a first limiting switch 38 or a second limiting switch 39.

Specifically, under the control of an electronic module, the driving motor 31 drives the second spindle 35 to extend out of the mounting support 10. Meanwhile, the second spindle 35 drives the sliding block 44 to move. The sliding block 44 drives the rocker 20 to rotate by the spring support rod 43, and the rocker 20 rotates to drive the roller 21 to be in contact with the ground. In this case, the shifting cam ring 37 abuts against the first limiting switch 38, and the second spindle 35 stops extending and is fixed. When the roller 21 needs to be retracted, under the control of the electronic module, the driving motor 31 drives the second spindle 35 to retract into the mounting support 10. Further, the spring support rod 43 drives the rocker 20 to rotate reversely, and the rocker 20 rotates to drive the roller 21 to be retracted.

As shown in Figs. 8 and 9, the lifting device 30 further includes a worm wheel housing 34 fixedly connected with the mounting support 10. The worm wheel 33 is arranged in the worm wheel housing 34. The worm wheel housing 34 can protect the worm wheel 33 and the worm 32, such that influence on the worm wheel 33 and the worm 32 can be avoided in a transmission process, making transmission precision higher.

In the embodiment, the lifting device 30 further includes a first rolling bearing 33.3 and a second rolling bearing 33.4. The worm wheel housing 34 includes a first worm wheel half-housing 34.1 and a second worm wheel half-housing 34.2 connected to each other. An inner ring of the first rolling bearing 33.3 and an inner ring of the second rolling bearing 33.4 are sleeved on two ends of the worm wheel 33 respectively. The first worm wheel half-housing 34.1 and the second worm wheel half-housing 34.2 are configured to fasten outer rings of the first rolling bearing 33.3 and the second rolling bearing 33.4. With the first rolling bearing 33.3 and the second rolling bearing 33.4, the worm wheel 33 can be centered, and a rotation process of the worm wheel 33 is smoother.

Specifically, a bottom wall of the mounting support 10 is further connected with a housing 14. The driving motor 31, the worm wheel 33 and the worm 32 are all located in a space defined by the mounting support 10 and the housing 14. In addition, when the roller is at the retraction position, the second spindle 35 is also located in the space defined by the mounting support 10 and the housing 14. The housing 14 can be configured to protect the above components.

As shown in Figs. 5-9, the spring support rod 43 includes a spring support rod shaft 43.3, an upper spring support rod head 43.1 and a lower spring support rod head 43.2. An upper end of the spring support rod shaft 43.3 is inserted into a first end of the upper spring support rod head 43.1. A second end of the upper spring support rod head 43.1 is hinged to the sliding block 44. A first end of the lower spring support rod head 43.2 is hinged to the rocker 20. A second end of the lower spring support rod head 43.2 is connected with a lower end of the spring support rod shaft 43.3. With the spring support rod 43 of the above structure, the spring support rod shaft 43.3 can slide in the upper spring support rod head 43.1, and the electric auxiliary driving device can adapt to the recess or the protrusion on the ground, such that the roller 21 can be always kept in contact with the ground, and a use scope of the electric auxiliary driving device can be enlarged.

In the embodiment, the balancing device 40 further includes a first compression spring 43.4 sleeved on a periphery of the spring support rod shaft 43.3. The first compression spring 43.4 is sandwiched between the upper spring support rod head 43.1 and the lower spring support rod head 43.2. The first compression spring 43.4 can achieve a buffering effect, such that the spring support rod 43 can move quickly in the upper spring support rod head 43.1 and the lower spring support rod head 43.2 under an elastic force of the spring when the roller 21 meets the recess or the protrusion on the ground. Further, the rocker 20 rotates quickly for a response, such that the roller 21 can always abut against the ground.

It should be noted that the balancing device 40 further includes an upper spring support rod bearing 41, a lower spring support rod bearing 42, a first articulated shaft and a second articulated shaft. The second end of the upper spring support rod head 43.1 is hinged to the sliding block 44 through the first articulated shaft. An inner ring of the upper spring support rod bearing 41 is sleeved on a periphery of the first articulated shaft. An outer ring of the upper spring support rod bearing 41 is sleeved on the second end of the upper spring support rod head 43.1. The first end of the lower spring support rod head 43.2 is hinged to the rocker 20 through the second articulated shaft. An inner ring of the lower spring support rod bearing 42 is sleeved on a periphery of the second articulated shaft. An outer ring of the lower spring support rod bearing 42 is sleeved on the first end of the lower spring support rod head 43.2. With the balancing device 40 of the above structure, the upper spring support rod head 43.1 and the lower spring support rod head 43.2 can rotate more smoothly.

In the embodiment, the spring support rod shaft 43.3 includes a tap bolt. The upper spring support rod head 43.1 is provided with a first stepped hole in a penetrating manner. A bolt head of the tap bolt is movably inserted into the first stepped hole. A bolt shank of the tap bolt is connected with the lower spring support rod head 43.2. When the upper spring support rod head 43.1 has a maximum distance from the lower spring support rod head 43.2, the bolt head of the tap bolt abuts against a stepped surface of the first stepped hole. The spring support rod shaft 43.3 is formed by the tap bolt, achieving advantages of convenient material acquisition and low cost.

Specifically, the tap bolt includes a reaming bolt. A threaded shank of the reaming bolt is connected with the lower spring support rod head 43.2. With the above structure, a lower end of the reaming bolt can form a fixed end, and an upper end of the reaming bolt can form a moving end, such that the reaming bolt can conveniently move in the upper spring support rod head 43.1, so as to guide the rocker 20.

As shown in Fig. 5, when the roller 21 is at the retraction position, the second spindle 35 is at a front end of the mounting support 10, and the sliding block 44 drives the upper spring support rod head 43.1 to be located close to the worm wheel 33. In this case, the upper spring support rod head 43.1 has the maximum distance from the lower spring support rod head 43.2, the spring support rod shaft 43.3 abuts against the stepped surface of the first stepped hole, and the spring support rod 43 drives the first end of the rocker 20 to be located close to the mounting support 10. In this way, a containment effect on the rocker 20 is achieved, and the roller 21 can be retracted.

As shown in Fig. 6, when the electric auxiliary driving device works, the driving motor 31 drives the worm 32 to rotate, such that the worm 32 drives the worm wheel 33 to rotate, then the second spindle 35 is driven to move to a rear end of the mounting support 10, and the second spindle 35 drives the sliding block 44 to move in an extension direction of the guiding structure. Further, the sliding block 44 drives the upper spring support rod head 43.1 to move along the straight line, and the spring support rod 43 drives the rocker 20 to rotate under the elastic force of the first compression spring 43.4. In this way, the roller 21 abuts against the ground, and meanwhile, the pulling device drives the roller 21 to rotate, such that the electric auxiliary driving device can drive the furniture to move. In this case, the first compression spring 43.4 is in a compressed state.

As shown in Fig. 7, when the roller 21 meets the protrusion on the ground, the roller 21 moves upward to drive the rocker 20 to rotate upward. As the spring support rod shaft 43.3 is connected with the lower spring support rod head 43.2, the upper end of the spring support rod shaft 43.3 moves upward along the upper spring support rod head 43.1 until the upper end of the spring support rod shaft 43.3 abuts against the first articulated shaft, such that upper end limiting of the spring support rod shaft 43.3 is implemented. In this case, the first compression spring 43.4 is in a compressed state. Moreover, as the spring support rod shaft 43.3 fails to continue to move upward, the rocker 20 cannot drive the roller 21 to move upward. A maximum height of the protrusion on the ground that can be compensated by the roller 21 is 20 mm.

As shown in Fig. 8, when the roller 21 meets the recess on the ground, the roller 21 moves downward to drive the rocker 20 to rotate downward. As the spring support rod shaft 43.3 is connected with the lower spring support rod head 43.2, the upper end of the spring support rod shaft 43.3 can move downward along the upper spring support rod head 43.1 until the upper end of the spring support rod shaft 43.3 abuts against the stepped surface of the first stepped hole, such that lower end limiting of the spring support rod shaft 43.3 is implemented. In this case, as the spring support rod shaft 43.3 fails to continue to move downward, the rocker 20 cannot drive the roller 21 to move downward. A maximum height of the recess on the ground that can be compensated by the roller 21 is 20 mm.

In the embodiment, the maximum height of the recess or the protrusion on the ground that can be compensated by the roller 21 is 20 mm. Clearly, an actual compensation value can be changed according to parameters such as a distance between limiting switches, an extension length of the spring support rod 43 or a mounting position of the auxiliary driving device.

It should be noted that when the auxiliary driving device needs to reduce pressure of workers, the second spindle 35 is always in a state of extending out of the rear end of the mounting support 10.

In addition, an additional vertical shaft can be designed to enable the roller 21 to turn. Clearly, the auxiliary driving device can also be provided with one or more rollers. For instance, two parallel and spaced rollers 21 are designed, and each roller 21 is provided with a separate motor. Alternatively, two auxiliary drivers are arranged as a pair in a spaced manner. Turning can also be implemented by controlling an electric motor located outside a curve to rotate faster than the other electric motor.

It should be noted that all types of electric motors can be regarded as driving motors 31. A gear motor provided with the worm wheel 33 is preferred. In addition, a gearless motor of a brushless direct current motor type can also be used.

As shown in Fig. 4, the rocker 20 includes a connecting section and a bearing fork 24 connected to each other. The bearing fork 24 includes two bearing fork arms arranged at two sides of the roller 21 respectively. The pulling device 50 is connected with one of the bearing fork arms. The roller 21 is provided with a roller shaft 22. One end of the roller shaft 22 is rotatably connected with the bearing fork 24. An output end of the pulling device 50 is connected with the other end of the roller shaft 22 in a driving manner. With the rocker 20 of the above structure, advantages of simple connection structure and convenient assembly are achieved. Moreover, with the bearing fork 24 designed with the two bearing fork arms, stress on two sides of the roller 21 can be more uniform.

In the embodiment, a second end of the connecting section is hinged to the mounting support 10.

As shown in Figs. 4 and 5, the electric auxiliary driving device further includes a rocker bearing shaft 11. The mounting support 10 is hinged to the second end of the rocker 20 through the rocker bearing shaft 11. The spring support rod 43 is movably arranged between the roller 21 and the rocker bearing shaft 11. The mounting support 10 can be hinged to the rocker 20 by the rocker bearing shaft 11, achieving an advantage of simple structure.

Specifically, the rocker 20 further includes a web plate 25. The two bearing fork arms are connected through one side of the web plate 25. The other side of the web plate 25 is connected with the connecting section. The connecting section and the bearing fork 24 are connected by the web plate 25, achieving an advantage of simple connection structure.

In the embodiment, the connecting section is provided with a groove 23 disposed obliquely downwards. The first end of the spring support rod 43 is inserted into the groove 23. The groove 23 can avoid the spring support rod 43, achieving an advantage of convenient arrangement.

Specifically, a first end of the spring support rod shaft 43.3 and the lower spring support rod head 43.2 are both located in the groove 23.

The mounting support 10 is provided with a stopper. The stopper abuts against the bearing fork 24 so as to limit a rotation angle of the rocker 20. With the stopper, the rocker 20 can be limited when the rocker 20 is at the retraction position, thus protecting the roller 21.

In the embodiment, the pulling device 50 includes a third gear motor 51. The third gear motor 51 and a transmission device are transversely arranged on a left arm of the bearing fork 24. Thus, output of the third gear motor 51 is directly applied to the roller shaft 22.

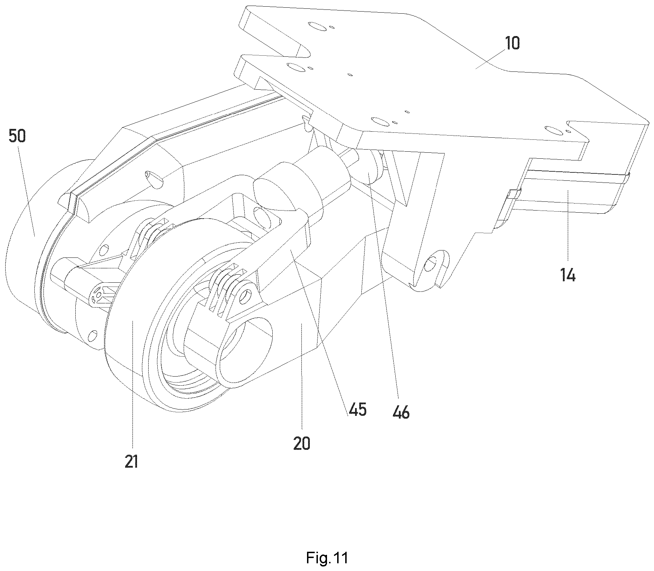

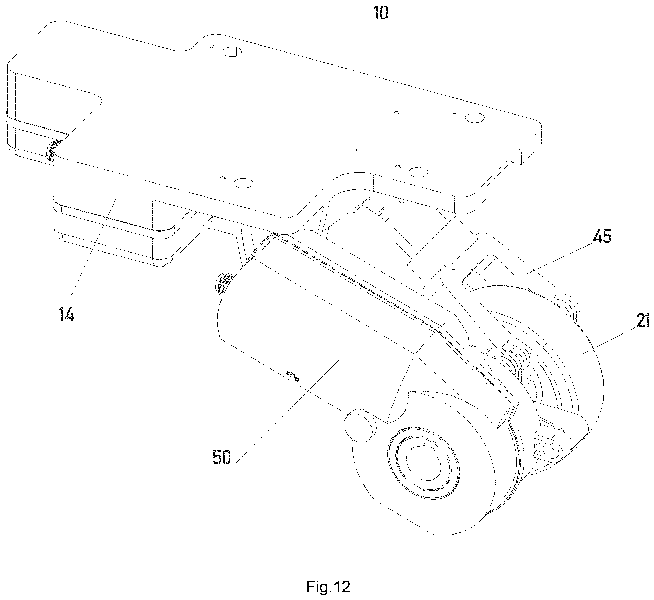

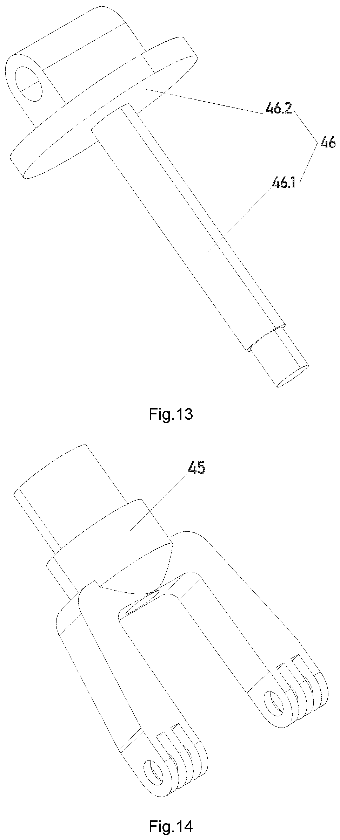

Embodiment 2 of the invention provides an electric auxiliary driving device. Embodiment 2 and Embodiment 1 are different in that, in Embodiment 2, as shown in Figs. 11-14, the spring support rod 43 includes an inserting seat 45 and an inserting pin 46, a first end of the inserting seat 45 is hinged to the rocker 20, a first end of the inserting pin 46 is inserted into a second end of the inserting seat 45, and a second end of the inserting pin 46 is hinged to a sliding block 44. Through cooperation between the inserting seat 45 and the inserting pin 46, the inserting pin 46 can slide in the inserting seat 45, and the electric auxiliary driving device can adapt to a recess or a protrusion on the ground, such that the roller 21 can be always kept in contact with the ground, and a use scope of the electric auxiliary driving device can be enlarged.

In the embodiment, the balancing device 40 further includes a second compression spring sleeved on a periphery of the spring support rod 43, and the second compression spring is sandwiched between the inserting seat 45 and the inserting pin 46. The second compression spring can achieve a buffering effect, such that the spring support rod 43 can move quickly in the upper spring support rod head 43.1 and the lower spring support rod head 43.2 under an elastic force of the spring when the roller 21 meets the recess or the protrusion on the ground. Further, the rocker 20 rotates quickly for a response, such that the roller 21 can always abut against the ground.

As shown in Figs. 11-14, the spring support rod 43 further includes a limiting member 47 connected with the first end of the inserting pin 46. The inserting pin 46 includes an inserting pin rod 46.1 and an inserting pin head 46.2 connected to each other. The first end of the inserting seat 45 is hinged to the rocker 20. The second end of the inserting seat 45 is provided with a second stepped hole. The inserting pin rod 46.1 is movably inserted into the second stepped hole. A second end of the inserting pin head 46.2 is hinged to the sliding block 44. When the inserting pin head 46.2 has a maximum distance from the inserting seat 45, the limiting member 47 abuts against a stepped surface of the second stepped hole. When the inserting pin head 46.2 has a minimum distance from the inserting seat 45, the inserting pin head 46.2 abuts against the inserting seat 45. With the above structure, an upper end of the inserting pin rod 46.1 forms a fixed end, and a lower end of the inserting pin rod forms a moving end, such that the inserting pin rod 46.1 moves conveniently in the inserting seat 45, so as to guide the rocker 20.

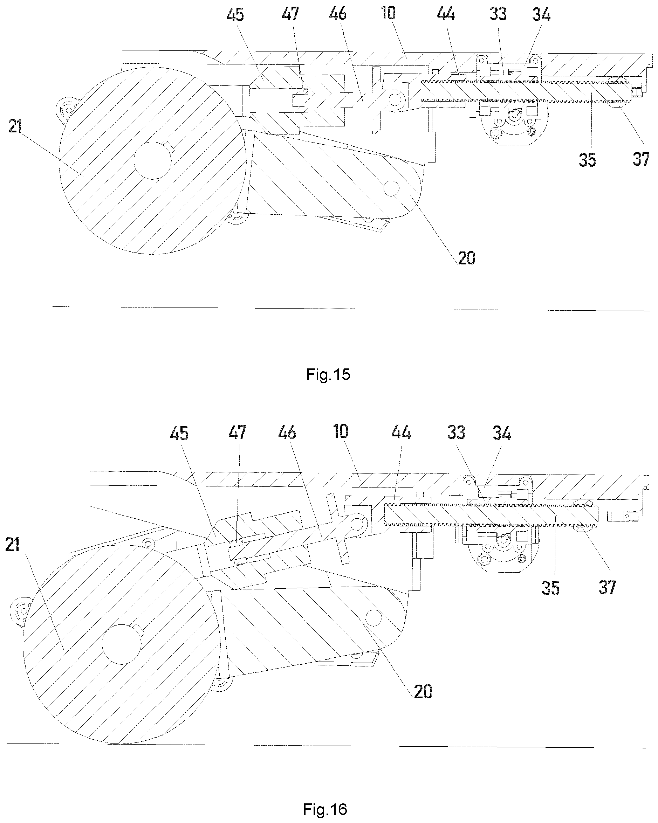

As shown in Fig. 15, when the roller 21 is at the retraction position, the inserting pin head 46.2 has the maximum distance from the inserting seat 45, and the limiting member 47 abuts against the stepped surface of the second stepped hole, such that a containment effect on the rocker 20 is achieved, and the roller 21 is retracted.

As shown in Fig. 16, when the electric auxiliary driving device works, the roller 21 abuts against the ground, and the inserting pin rod 46.1 moves in the inserting seat 45, such that the electric auxiliary driving device adapts to changing conditions of the ground at any time.

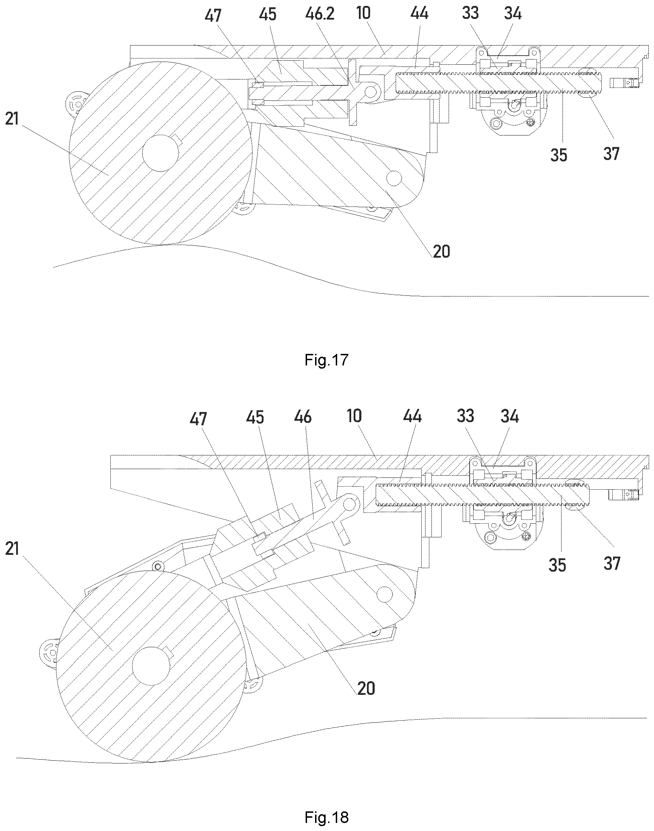

As shown in Fig. 17, when the roller 21 meets the protrusion on the ground, the inserting pin head 46.2 has the minimum distance from the inserting seat 45, and the inserting pin head 46.2 abuts against the inserting seat 45, such that a rotation angle of the rocker 20 is limited, and the roller 21 can compensate for the protrusion on the ground.

As shown in Fig. 18, when the roller 21 meets the recess on the ground, the inserting pin head 46.2 has the maximum distance from the inserting seat 45, and the limiting member 47 abuts against the stepped surface of the second stepped hole, such that a rotation angle of the rocker 20 is limited, and the roller 21 can compensate for the recess on the ground.

Embodiment 3 of the invention provides a hospital bed. The hospital bed includes a bed body and an electric auxiliary driving device. A mounting support of the electric auxiliary driving device is connected with the bed body. The electric auxiliary driving device includes the above-mentioned electric auxiliary driving device. According to the hospital bed with the electric auxiliary driving device, the lifting device and the balancing device are connected by the sliding block 44 moving linearly, and the sliding block 44 moves linearly in a horizontal direction. Thus, a lifting function of the electric auxiliary driving device can be achieved in a very small mounting space. Moreover, other parts of the electric auxiliary driving device are all arranged below the mounting support 10, reducing mounting space in a height direction.

## Claims

1. An electric auxiliary driving device, comprising:
a mounting support (10) fixedly connected with a furniture;
a rocker (20), wherein a first end of the rocker (20) is provided with a rotatable roller (21), and a second end of the rocker (20) is hinged to the mounting support (10);
a pulling device (50) connected with the rocker (20), wherein the pulling device (50) is connected with the roller (21) in a driving manner;
a lifting device (30) comprising a driving device and a sliding block (44) moving along a straight line, wherein the driving device drives the rocker (20) to rotate by driving the sliding block (44) to move; and
a balancing device (40) comprising a spring support rod (43), wherein a first end of the spring support rod (43) is hinged to the rocker (20), and a second end of the spring support rod (43) is hinged to the sliding block (44).

2. The electric auxiliary driving device according to claim 1, wherein the balancing device (40) further comprises a guiding structure, the guiding structure extends along the straight line, the guiding structure comprises a guiding element and a guiding groove (12), the guiding element is inserted into the guiding groove (12), the guiding groove (12) is provided on one of the mounting support (10) or the sliding block (44), and the guiding element is arranged on the other one of the mounting support (10) or the sliding block (44).

3. The electric auxiliary driving device according to claim 2, wherein
the guiding element comprises a linear guide rail (44.1) arranged on a side wall of the sliding block (44), the mounting support (10) is provided with two parallel guiding plates, and a space between the two guiding plates forms the guiding groove (12); and alternatively,
the guiding element comprises a linear guide rail (44.1) arranged on a bottom wall of the sliding block (44), the mounting support (10) is provided with two parallel guiding ribs, and a space between the two guiding ribs forms the guiding groove (12).

4. The electric auxiliary driving device according to claim 1, wherein the driving device comprises a first gear motor and a first spindle, the first gear motor drives the first spindle to rotate, the first spindle is provided with an external thread, the sliding block (44) is provided with a first threaded hole, and the external thread is connected with the first threaded hole in a threaded manner.

5. The electric auxiliary driving device according to claim 1, wherein the driving device comprises a driving motor (31) and a second spindle (35) connected with the driving motor (31) in a driving manner, and the second spindle (35) is connected with the sliding block (44) and drives the sliding block (44) to move along the straight line.

6. The electric auxiliary driving device according to claim 5, wherein the lifting device (30) further comprises a worm wheel (33) and a worm (32) that are capable of rotating relatively and cooperating with each other, the driving motor (31) comprises a second gear motor, an output end of the second gear motor is connected with the worm (32) in a driving manner, teeth of the worm (32) are engaged with external teeth (33.2) of the worm wheel (33), the worm wheel (33) is provided with a second threaded hole (33.1), and the second spindle (35) penetrates the second threaded hole (33.1) and is connected with the worm wheel (33) in a threaded manner.

7. The electric auxiliary driving device according to claim 6, wherein
the lifting device (30) further comprises a worm wheel housing (34) fixedly connected with the mounting support (10), and the worm wheel (33) is arranged in the worm wheel housing (34); and
the lifting device (30) further comprises a first rolling bearing (33.3) and a second rolling bearing (33.4), the worm wheel housing (34) comprises a first worm wheel half-housing (34.1) and a second worm wheel half-housing (34.2) connected to each other, an inner ring of the first rolling bearing (33.3) and an inner ring of the second rolling bearing (33.4) are sleeved on two ends of the worm wheel (33) respectively, and the first worm wheel half-housing (34.1) and the second worm wheel half-housing (34.2) are configured to fasten outer rings of the first rolling bearing (33.3) and the second rolling bearing (33.4).

8. The electric auxiliary driving device according to claim 1, wherein
the spring support rod (43) comprises a spring support rod shaft (43.3), an upper spring support rod head (43.1) and a lower spring support rod head (43.2), an upper end of the spring support rod shaft (43.3) is inserted into a first end of the upper spring support rod head (43.1), a second end of the upper spring support rod head (43.1) is hinged to the sliding block (44), a first end of the lower spring support rod head (43.2) is hinged to the rocker (20), and a second end of the lower spring support rod head (43.2) is connected with a lower end of the spring support rod shaft (43.3); and
the balancing device (40) further comprises a first compression spring (43.4) being sleeved on a periphery of the spring support rod shaft (43.3), and the first compression spring (43.4) is sandwiched between the upper spring support rod head (43.1) and the lower spring support rod head (43.2).

9. The electric auxiliary driving device according to claim 8, wherein the balancing device (40) further comprises an upper spring support rod bearing (41), a lower spring support rod bearing (42), a first articulated shaft and a second articulated shaft, the second end of the upper spring support rod head (43.1) is hinged to the sliding block (44) through the first articulated shaft, an inner ring of the upper spring support rod bearing (41) is sleeved on a periphery of the first articulated shaft, an outer ring of the upper spring support rod bearing (41) is sleeved on the second end of the upper spring support rod head (43.1), the first end of the lower spring support rod head (43.2) is hinged to the rocker (20) through the second articulated shaft, an inner ring of the lower spring support rod bearing (42) is sleeved on a periphery of the second articulated shaft, and an outer ring of the lower spring support rod bearing (42) is sleeved on the first end of the lower spring support rod head (43.2).

10. The electric auxiliary driving device according to claim 9, wherein the spring support rod shaft (43.3) comprises a tap bolt, the upper spring support rod head (43.1) is provided with a first stepped hole in a penetrating manner, a bolt head of the tap bolt is movably inserted into the first stepped hole, a bolt shank of the tap bolt is connected with the lower spring support rod head (43.2), and when the upper spring support rod head (43.1) has a maximum distance from the lower spring support rod head (43.2), the bolt head of the tap bolt abuts against a stepped surface of the first stepped hole.

11. The electric auxiliary driving device according to claim 10, wherein the tap bolt comprises a reaming bolt, and a threaded shank of the reaming bolt is connected with the lower spring support rod head (43.2).

12. The electric auxiliary driving device according to claim 1, wherein
the spring support rod (43) comprises an inserting seat (45) and an inserting pin (46), a first end of the inserting seat (45) is hinged to the rocker (20), a first end of the inserting pin (46) is inserted into a second end of the inserting seat (45), and a second end of the inserting pin (46) is hinged to the sliding block (44); and
the balancing device (40) further comprises a second compression spring sleeved on a periphery of the spring support rod (43), and the second compression spring is sandwiched between the inserting seat (45) and the inserting pin (46).

13. The electric auxiliary driving device according to claim 12, wherein the spring support rod (43) further comprises a limiting member (47) connected with the first end of the inserting pin (46), the inserting pin (46) comprises an inserting pin rod (46.1) and an inserting pin head (46.2) connected to each other, the first end of the inserting seat (45) is hinged to the rocker (20), the second end of the inserting seat (45) is provided with a second stepped hole, the inserting pin rod (46.1) is movably inserted into the second stepped hole, a second end of the inserting pin head (46.2) is hinged to the sliding block (44), when the inserting pin head (46.2) has a maximum distance from the inserting seat (45), the limiting member (47) abuts against a stepped surface of the second stepped hole, and when the inserting pin head (46.2) has a minimum distance from the inserting seat (45), the inserting pin head (46.2) abuts against the inserting seat (45).

14. The electric auxiliary driving device according to claim 1, wherein the rocker (20) comprises a connecting section and a bearing fork (24) connected to each other, the bearing fork (24) comprises two bearing fork arms arranged at two sides of the roller (21) respectively, the pulling device (50) is connected with one of the bearing fork arms, the roller (21) is provided with a roller shaft (22), one end of the roller shaft (22) is rotatably connected with the bearing fork (24), and an output end of the pulling device (50) is connected with the other end of the roller shaft (22) in a driving manner.

15. The electric auxiliary driving device according to claim 14, wherein
the electric auxiliary driving device further comprises a rocker bearing shaft (11), wherein the mounting support (10) is hinged to the second end of the rocker (20) through the rocker bearing shaft (11), and the spring support rod (43) is movably arranged between the roller (21) and the rocker bearing shaft (11);
the rocker (20) further comprises a web plate (25), the two bearing fork arms are connected through one side of the web plate (25), and the other side of the web plate (25) is connected with the connecting section;
the connecting section is provided with a groove (23) disposed obliquely downwards, and the first end of the spring support rod (43) is inserted into the groove (23); and
the mounting support (10) is provided with a stopper, and the stopper abuts against the bearing fork (24) so as to limit a rotation angle of the rocker (20).

16. A hospital bed, comprising:
a bed body; and
an electric auxiliary driving device, wherein a mounting support of the electric auxiliary driving device is connected with the bed body, and the electric auxiliary driving device comprises the electric auxiliary driving device according to any one of claims 1-15.
